(19) Europäisches Patentamt
European Patent Office
Office européen des brevets

(11) **EP 2 249 475 A2**

(12) **EUROPÄISCHE PATENTANMELDUNG**

(43) Veröffentlichungstag:
**10.11.2010 Patentblatt 2010/45**

(51) Int Cl.:
**H02P 29/02** *(2006.01)*

(21) Anmeldenummer: **10004736.4**

(22) Anmeldetag: **05.05.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **08.05.2009 DE 102009020473**

(71) Anmelder: **Diehl AKO Stiftung & Co. KG**
**88239 Wangen (DE)**

(72) Erfinder:
• **Zeh, Stefan**
**88239 Wangen (DE)**
• **Olarescu, Nicola-Valeriu**
**88239 Wangen (DE)**

(74) Vertreter: **Diehl Patentabteilung**
**c/o Diehl Stiftung & Co. KG**
**Stephanstrasse 49**
**90478 Nürnberg (DE)**

(54) **Verfahren zur Fehlererkennung bei der Ansteuerung eines Drehfeldmotors**

(57) Es wird ein Verfahren zur Fehlererkennung bei der Ansteuerung eines Drehfeldmotors mittels eines Pulswechselrichters angegeben, wobei elektromagnetische Zustandsgrößen des Drehfeldmotors mittels eines mathematischen Modells in Raumzeigerdarstellung ermittelt werden, und wobei der Pulswechselrichter unter Verwendung von Raumzeigergrößen elektronisch angesteuert wird. Dabei ist vorgesehen, dass während des Betriebs des Drehfeldmotors der Raumzeiger einer ungeführten Zustandsgröße des Drehfeldmotors gebildet wird, dass der gebildete Raumzeiger auf eine spektrale Komponente mit der doppelten Frequenz des Drehfelds analysiert wird und dass bei Vorhandensein der spektralen Komponente mit doppelter Frequenz auf einen Teilwindungsschluss in den Statorwicklungen geschlossen wird.

Fig. 1

EP 2 249 475 A2

**Beschreibung**

Die Erfindung betrifft ein Verfahren zur Fehlererkennung bei der Ansteuerung eines Drehfeldmotors mittels eines Pulswechselrichters, wobei elektromagnetische Zustandsgrößen des Drehfeldmotors mittels eines mathematischen Modells in Raumzeigerdarstellung ermittelt werden, und wobei der Pulswechselrichter unter Verwendung von Raumzeigergrößen elektronisch angesteuert wird.

Die Ansteuerung eines Drehfeldmotors unter Ermittlung von Raumzeigergrößen ist an sich bekannt. Das Verfahren wird inzwischen zur Steuerung unterschiedlichster Drehfeldmotoren, wie einem insbesondere permanent erregten elektrischen Synchronmotor, einem elektrischen Reluktanzmotor oder einem elektrischen Asynchronmotor, in unzähligen Applikationen eingesetzt. Insbesondere wird das Verfahren zur Ansteuerung eines elektrischen Trommelantriebs in einer Waschmaschine herangezogen.

Bei der Ansteuerung eines Drehfeldmotors mittels Raumzeigergrößen wird die Tatsache ausgenutzt, dass die elektromagnetischen Zustandsgrößen in einem Drehfeldmotor durch ihren Betrag und durch ihre Richtung in einer Ebene hinreichend beschrieben sind. In einem geeigneten zweidimensionalen Koordinatensystem lassen sich somit die elektromagnetischen Zustandsgrößen eines Drehfeldmotors jeweils durch einen sogenannten Raumzeiger darstellen, der durch seine Länge (Betrag) und durch seine Lage (Winkel) beschrieben ist. Alternativ können zu seiner Beschreibung die entsprechenden Koordinaten auf den Achsen des Koordinatensystems herangezogen werden. Durch eine mathematische Transformation der den Drehfeldmotor beschreibenden Zustandsgrößen auf ein motorbezogenes und insbesondere auf ein drehendes Koordinatensystem lässt sich dieser regelungstechnisch auf einen Gleichstrommotor zurückführen.

Grundsätzlich werden bei der Regelung eines Drehfeldmotors mittels Raumzeigergrößen zwei verschiedene Koordinatensysteme verwendet. Das statorfeste Koordinatensystem, dessen Achsen mit $\alpha$ und $\beta$ bezeichnet werden, ist fest mit dem Stator des Drehfeldmotors verbunden und steht still. Die elektromagnetischen Raumzeigergrößen rotieren in diesem Koordinatensystem um den Ursprung mit der Frequenz des Drehfeldes. Die Klemmenspannungen, d.h. die zwischen den einzelnen Phasen oder Stromzuleitungen des Motors anliegenden Spannungen, addieren sich vektoriell zu einem rotierenden Statorspannungsraumzeiger. Entsprechend dem Statorspannungsraumzeiger rotiert in dem $\alpha,\beta$-Koordinatensystem der aus der Klemmenspannung resultierende Raumzeiger der Statorflussverkettung.

Das feldorientierte Koordinatensystem, dessen Achsen mit d und q bezeichnet werden, rotiert mit dem Raumzeiger der Flussverkettung von Rotorfluss und Statorwicklung, welche verkürzt auch Rotorflussverkettung genannt wird. Dieses Koordinatensystem ist insofern auf das Magnetfeld ausgerichtet, das den Rotor durchsetzt. Es rotiert mit der Frequenz der speisenden Spannung bzw. der Frequenz des Statorspannungsraumzeigers. In diesem Koordinatensystem sind die elektromagnetischen Größen des Drehfeldmotors Gleichgrößen, d.h. ihre Koordinaten weisen keinen sinusförmigen Verlauf auf.

Zur Ansteuerung des Pulswechselrichters, der die einzelnen Phasen- bzw. Klemmenspannungen in den Stromzuleitungen des Motors liefert, wird beispielsweise der gewünschte Statorspannungsraumzeiger mittels eines entsprechenden mathematischen Modells, welches Kenngrößen des Motors beinhaltet, in die Phasen- bzw. Klemmenspannungen umgerechnet und der Pulswechselrichter zur Spannungsstellung entsprechend angesteuert. Umgekehrt können natürlich die Phasenspannungen auch in den Statorspannungsraumzeiger umgerechnet werden.

Die Verwendung der beschriebenen Koordinatensysteme und damit die Heranziehung der Raumzeigergrößen zur Ansteuerung eines Drehfeldmotors ermöglicht es insbesondere, ohne einen Tachogenerator oder einen Umdrehungssensor auszukommen. Denn durch eine geeignete mathematische Umrechnung kann die Lage des Raumzeigers der Rotorflussverkettung ermittelt und hieraus auf die Drehzahl und Winkellage des Drehfeldmotors geschlossen werden. Hierzu ist lediglich eine Ermittlung der Phasenströme und der Phasen- bzw. der Klemmenspannungen erforderlich. Dabei sind die Phasenspannungen und der hieraus resultierende Statorspannungsraumzeiger im System bereits bekannt, da unter Zuhilfenahme des implementierten mathematischen Modells diese Größen zur Ansteuerung des Pulswechselrichters herangezogen werden. Mit anderen Worten eignet sich die beschriebene Ansteuerung unter Zuhilfenahme der Raumzeigergrößen zu einer bis auf Strom- sowie gegebenenfalls Spannungssensoren sensorlosen Steuerung oder Regelung eines Drehfeldmotors.

Ein Teilwindungsschluss im Stator eines Drehfeldmotors, der z.B. durch eine mangelhafte Isolation der Wicklungsdrähte entstehen kann, stellt ein ernstes, sicherheitsrelevantes Problem dar. Insbesondere bei einem Antriebsmotor für den Trommelantrieb einer Waschmaschine, der bei hohen Drehzahlen in einem Feldschwächebetrieb betrieben wird, fließen in einer kurzgeschlossenen Wicklung derart hohe Ströme, dass die kurzgeschlossene Wicklung stark überhitzt und die Gefahr einer Entzündung des Motors besteht.

Es ist deshalb von großem Interesse, einen Teilwindungsschluss bereits während des Betriebs eines Drehfeldmotors erkennen zu können. Die AT 412 248 B lehrt dazu, ohne den Einsatz zusätzlicher Sensoren das genannte Ansteuerverfahren für einen Drehfeldmotor unter Heranziehung von Raumzeigergrößen zu verwenden. Zur Diagnose eines Teilwindungsschlusses wird entsprechend der AT 412 248 B mittels des implementierten mathematischen Modells der Statorstromraumzeiger einerseits rechnerisch nachgebildet und andererseits mit vorhandenen Stromsensoren gemessen. Anschließend wird der räumliche Verlauf der gebildeten Differenz betrachtet. Lastschwankungen im Antrieb wirken jedoch unmittelbar auf den Statorstromraumzeiger und können nachteiligerweise insofern zu einer falschen positiven Fehlerdiagnose führen. Zudem wird das angegebene Verfahren bei niedrigen Strömen unsensibel.

Weiter lehrt auch die AT 409 906 B, zur Erkennung eines Teilwindungsschlusses das Ansteuerverfahren mittels Raumzeigergrößen heranzuziehen, ohne dass zusätzliche Sensoren benötigt werden. Dabei werden während des Betriebs des Drehfeldmotors die Einschaltzeiten spezifischer Schaltzustände des Pulswechselrichters überwacht. Insbesondere wird geprüft, ob die Einschaltzeiten der aktiven Schaltzustände gleichmäßig auf die sechs aktiven Schaltzustände des Pulswechselrichters verteilt sind. Eine asymmetrische Verteilung wird als Hinweis auf eine Asymmetrie im Motor, insbesondere auf einen Teilwindungsschluss, interpretiert. Nachteiligerweise können auch bei diesem in der AT 409 906 B beschriebenen Verfahren zur Erkennung eines Teilwindungsschlusses Lastschwankungen im Antrieb zu einer falschen positiven Fehlerdiagnose führen.

Es ist Aufgabe der Erfindung, ein Verfahren der eingangs genannten Art anzugeben, welches ohne zusätzliche Sensoren eine möglichst sichere Erkennung eines Teilwindungsschlusses in den Statorwicklungen des Drehfeldmotors während des laufenden Betriebs ermöglicht.

Diese Aufgabe wird erfindungsgemäß durch ein Verfahren mit der Merkmalskombination gemäß Anspruch 1 gelöst.

Demnach wird für eine Ansteuerung eines Drehfeldmotors mittels eines Pulswechselrichters, wobei elektromagnetische Zustandsgrößen des Drehfeldmotors mittels eines mathematischen Modells in Raumzeigergrößeren transformiert werden, und wobei der Pulswechselrichter entsprechend der Raumzeigergrößen elektronisch angesteuert wird, ein Verfahren zur Fehlererkennung angegeben, wobei während des Betriebs des Drehfeldmotors der Raumzeiger einer ungeführten Zustandsgröße des Drehfeldmotors gebildet wird, wobei der gebildete Raumzeiger auf eine spektrale Komponente mit der doppelten Frequenz des Drehfelds analysiert wird, und wobei bei Vorhandensein der spektralen Komponente mit doppelter Frequenz auf einen Teilwindungsschluss in den Statorwicklungen geschlossen wird.

Die Erfindung geht dabei in einem ersten Schritt von der Erkenntnis aus, dass ein Teilwindungsschluss in den Statorwicklungen an sich zu einer Asymmetrie der elektromagnetischen Zustandsgrößen des Drehfeldmotors führt. Eine solche Asymmetrie kann aus einer ungeführten Zustandsgröße des Drehfeldmotors ermittelt werden. Bei einer geführten, d.h. geregelten oder gesteuerten, Zustandsgröße wird die Asymmetrie geglättet bzw. nicht sichtbar. Wird der Drehfeldmotor beispielsweise stromgeregelt, so kann die Asymmetrie in den Klemmenspannungen, nicht aber in den Phasenströmen erkannt werden.

In einem zweiten Schritt geht die Erfindung von der Überlegung aus, dass der Raumzeiger der Flussverkettung von Rotorfluss und Statorwicklung im statorfesten Koordinatensystem mit konstantem Betrag entsprechend der Frequenz des Statorspannungszeigers, der über den Pulswechselrichter vorgegeben ist, rotiert. Bei einem Teilwindungsschluss verändert sich die Trajektorie des Raumzeigers der Flussverkettung von einem zentrischen Kreis zu einer Ellipse. Dem Raumzeiger der Flussverkettung wird eine Asymmetrie mit der doppelten Frequenz des Drehfeldes eingeprägt. Bei einem Teilwindungsschluss schwankt insofern die Flussverkettung von Rotorfluss und Statorwicklung mit der doppelten Frequenz des Drehfeldes. Damit schwankt auch die Ableitung dieser Flussverkettung, nämlich die induzierte Spannung, die auch als elektromotorische Kraft bezeichnet wird. Als Folge weisen nahezu alle elektromagnetischen Zustandsgrößen im Drehfeldmotor bei einem Betrieb mit einem Teilwindungsschluss eine signifikante Spektralkomponente mit doppelter Feldfrequenz, d.h. der doppelten Grundfrequenz des rotierenden Systems, auf.

In einem dritten Schritt schließlich geht die Erfindung von der Überlegung aus, dass bei der beschriebenen Ansteuerung mittels Raumzeigergrößen diese im Steuerungssystem ohnehin vorliegen, so dass durch Analyse der gebildeten Raumzeigergrößen auf eine spektrale Komponente mit der doppelten Frequenz des Drehfelds ohne zusätzlichen Sensoraufwand im Betrieb des Drehfeldmotors auf einen Teilwindungsschluss geschlossen werden kann.

Die Erfindung ist nicht eingeschränkt auf die Heranziehung spezifischer Zustandsgrößen des Drehfeldmotors. Insbesondere kann der Statorstromraumzeiger, der Statorspannungsraumzeiger, der Raumzeiger der Flussverkettung aus Rotorfluss und Statorwicklung (kurz: Rotorflussverkettung) oder der Raumzeiger der elektromotorischen Kraft als Ableitung hiervon gleichermaßen zur Analyse auf die gesuchte spektrale Komponente herangezogen werden. Die Wahl einer dieser Größen ist insbesondere abhängig von dem zu steuernden Drehfeldmotor und von dem konkret eingesetzten Ansteuerverfahren.

Zur Durchführung des Verfahrens wird beispielsweise aus ermittelten Istgrößen oder aus dem Ansteuersystem bekannten Größen, wie insbesondere den Phasenströmen oder den gestellten Phasenspannungen, mittels des implementierten mathematischen Modells der Raumzeiger der zu betrachtenden Zustandsgröße gebildet und zur Feststellung eines Teilwindungsschlusses auf das Vorhandensein einer spektralen Komponente mit der doppelten Frequenz des Drehfeldes analysiert. Die Erfindung ist nicht auf eine konkrete spezifische Analyse des Raumzeigers hinsichtlich der gesuchten spektralen Komponente eingeschränkt. Grundsätzlich können hierzu verschiedene, bekannte Verfahren herangezogen werden. Beispielsweise bietet sich eine Fourier-Trransformation zur Analyse an, woraus der Anteil bzw. Betrag der Komponente mit der doppelten Frequenz der Grundfrequenz ersichtlich wird. Bevorzugt wird ein insbesondere elektronisch oder schaltungstechnisch implementierter Bandfilter eingesetzt, der die Komponente mit doppelter Grundfrequenz passieren lässt. Ein solcher Filter kann elektronisch durch geeignete Rechenvorschriften in einem ohnehin vorhandenen Mikrocomputer des Ansteuersystems oder dergleichen implementiert sein.

In welchem Koordinaten- oder Bezugssystem der Raumzeiger auf das Vorhandensein der spektralen Komponente mit doppelter Frequenz analysiert wird, ist für die Erfindung ebenso unerheblich. Bevorzugt wird der Betrag des Raumzeigers auf die spektrale Komponente mit der doppelten Grundfrequenz untersucht. In einer Weiterbildung wird hierbei der Betrag mittels einer Fourier-Analyse bei der doppelten Grundfrequenz analysiert. Auch bei einer Implementierung des Steuerungsverfahrens unter Betrachtung der Raumkoordinaten des Raumzeigers im jeweiligen Koordinatensystem kann der Betrag in einfacher Art und Weise ermittelt werden.

Wie erwähnt bietet sich das Verfahren zur Ansteuerung eines Drehfeldmotors unter Verwendung von Raumzeigergrößen insbesondere zu einer sogenannten sensorlosen, d.h. tachogeneratorlosen Steuerung an. Bei einem solchen Verfahren wird aus den bekannten oder gemessenen Phasenströmen und Phasen- bzw. Klemmenspannungen der Statorstromraumzeiger bzw. der Statorspannungsraumzeiger gebildet.

Unter einer beispielhaften Betrachtung der Statorspannungsgleichung eines permanent erregten Synchronmotors:

$$ e = u - ri - l\,\frac{di}{dt} \quad , $$

wobei e den Raumzeiger der elektromotorischen Kraft, u den Statorspannungsraumzeiger, i den Statorstromraumzeiger, r den ohmschen Widerstand der Statorwicklung und I die Induktivität der Statorwicklungen angibt, wird ersichtlich, dass alle Größen zur Ermittlung des Raumzeigers der elektromotorischen Kraft für den gegebenen Drehfeldmotor während des Betriebs bekannt sind. Der ohmsche Widerstand r der Statorwicklungen kann zweckmäßigerweise im Stillstand des Drehfeldmotors über das Stellen einer Gleichspannung und Verrechnung mit dem dabei gemessenen Gleichstrom bestimmt werden. Ebenso kann die Induktivität der Statorwicklung zweckmäßigerweise im Stillstand mit einem geeigneten Spannungspuls und einer dynamischen Auswertung der Stromantwort ermittelt werden. Der Statorspannungsraumzeiger u wiederum ist innerhalb des Ansteuersystems bekannt. Der Statorstromraumzeiger i wird über eine Messung der Phasenströme und entsprechende Umrechnung in die Raumzeigergröße bestimmt. Über die Lage des Raumzeigers der elektromotorischen Kraft kann auf die Rotorlage zurückgeschlossen werden, so dass eine Ansteuerung des Drehfeldmotors ohne Tachogenerator ermöglicht ist.

Aus der Statorspannungsgleichung wird weiter ersichtlich, dass zur Bestimmung des Raumzeigers der elektromotorischen Kraft eine Differentiation über den Statorstromraumzeiger erforderlich ist. Da bekanntermaßen eine numerische Differentiation zu relativ großen Fehlern in der Ausgabegröße führt, wird zur Ansteurung des Drehfeldmotors bevorzugt der Raumzeiger der Flussverkettung aus Rotorfluss und Statorwicklung herangezogen, der sich durch Integration über den Raumzeiger der elektromotorischen Kraft ermitteln lässt. Der Raumzeiger der Flussverkettung Ψ aus Rotorfluss und Statorwicklung ergibt sich dann wie folgt:

$$ \Psi = \int (u - ri)dt - li \,. $$

Bei einer "sensorlosen" Ansteuerung eines Drehfeldmotors sind somit der Raumzeiger der elektromotorischen Kraft und/oder der Raumzeiger der Flussverkettung aus Rotorfluss und Statorwicklung systemimmanent bekannt. Sie werden innerhalb des mathematischen Modells während der Ansteuerung gebildet.

Bevorzugt wird daher zur Analyse der beschriebenen Spektralkomponente mit doppelter Grundfrequenz der Raumzeiger der elektromotorischen Kraft oder der Raumzeiger der Flussverkettung von Rotorfluss und Statorwickung gebildet und analysiert. Zur Ermittlung eines Teilwindungsschlusses ist insofern bei den beschriebenen Ansteuerverfahren lediglich ein zusätzlicher Analyseschritt erforderlich.

In einer Weiterbildung hierzu wird der Raumzeiger des gesamten Statorflusses, d.h. der Flussverkettung von Rotorfluss und Statorwicklung einschließlich eines Statorstreuflusses, gebildet und analysiert. Dabei wird der magnetische Streufluss berücksichtigt, der sich aus der realen Anordnung der Statorwicklungen ergibt und nichts zur magnetischen Kopplung der Wicklungen beiträgt.

Wird der Raumzeiger der elektromotorischen Kraft zur Analyse herangezogen, wird vorteilhafterweise dessen Betrag gebildet und durch die Momentandrehzahl des Drehfeldmotors dividiert. Dadurch wird die Abhängigkeit des Betrags des Raumzeigers der elektromotorischen Kraft von der Drehzahl eliminiert.

In einer weiter bevorzugten Ausgestaltung der Erfindung werden die Raumkoordinaten des betrachteten Raumzeigers auf die spektrale Komponente mit der doppelten Frequenz des Drehfeldes analysiert, wobei die beiden Koordinaten des zu analysierenden Raumzeigers einem Fourier-Test bei der doppelten Grundfrequenz unterzogen werden. Durch eine Fourier-Analyse des spektralen Anteils doppelter Grundfrequenz der Raumkoordinaten kann unmittelbar auf die räumliche Lage des Teilwindungsschlusses geschlossen werden. Es werden die Hauptachsen der elliptischen Trajektorie ersichtlich.

Sowohl der Drehfeldmotor als auch der Pulswechselrichter können an sich bereits eine vorhandene Unsymmetrie aufweisen, die sich als Verformung der Trajektorien der Raumzeigergrößen darstellt. Zweckmäßigerweise wird daher bei der Analyse auf das Vorhandensein der spektralen Komponente mit der doppelten Frequenz des Drehfeldes eine systemimmanente Unsymmetrie berücksichtigt. Hierdurch wird die Empfindlichkeit des Verfahrens zur Fehlererkennung verbessert. Die Unsymmetrie kann insbesondere an dem ungestörten System Pulswechselrichter und Drehfeldmotor ermittelt und bei der Durchführung des Verfahrens zur Fehlererkennung mathematisch eliminiert werden.

In einer weiteren vorteilhaften Ausgestaltung wird die Amplitude der betrachteten spektralen Komponente mit doppelter Grundfrequenz ermittelt und auf einen Nennwert bezogen. Wird beispielsweise die gewonnene Amplitude der betrachteten spektralen Komponente mit doppelter Frequenz des Drehfeldes im Falle der Rotorflussverkettung oder im Falle der elektromotorischen Kraft auf den jeweiligen Nennwert bezogen, wird die Analyse genauer und zeigt bei einem leerlaufenden Drehfeldmotor nahezu den Anteil der kurzgeschlossenen Windungen zur Gesamtwindungsanzahl an. Ein weiter verbessertes Verfahren ergibt sich, wenn insbesondere bei einem Asynchronmotor die gewonnene Amplitude der spektralen Komponente doppelter Frequenz der Flussverkettung aus Rotorfluss und Statorwicklung auf den gesamten Statorfluss bezogen wird. Hierdurch wird das Kriterium des Vorhandenseins der spektralen Komponente doppelter Frequenz im Wesentlichen stromunabhängig.

In einer weiter bevorzugten Ausgestaltung der Erfindung wird als Kriterium für das Vorhandensein der spektralen Komponente mit doppelter Frequenz des Drehfeldes das Überschreiten eines vorgegebenen oder vorgebbaren Schwellwerts herangezogen. Bei Überschreiten des Schwellwerts durch die jeweils betrachtete Größe der analysierten spektralen Komponente wird auf einen Teilwindungsschluss erkannt und gegebenenfalls ein entsprechendes Fehlersignal oder eine entsprechende Information ausgegeben. Um einen Motorschaden zu vermeiden, kann bei Überschreiten des Schwellwertes der Motor auch gestoppt oder mit verringerter Leistung weiter betrieben werden.

Vorteilhafterweise wird der ermittelte Raumzeiger zusätzlich auf Asymmetrien untersucht, wobei aus den aufgefundenen Asymmetrien auf Asymmetrien der Vorrichtungen zur Ermittlung der elektrischen Istgrößen und/oder der Spannungssteller des Pulswechselrichters geschlossen wird. Da die nachgebildeten Raumzeiger von den installierten Messeinrichtungen für Ströme oder Spannungen abhängen, werden Asymmetrien in der Strommessung oder Asymmetrien bei der Spannungsmessung ebenfalls in den ermittelten Raumzeigern abgebildet. Wird zur Bildung des Raumzeigers die vom Pulswechselrichter gestellte Sollspannung herangezogen, bildet der ermittelte Raumzeiger insbesondere die Asymmetrien der Spannungssteller des Pulswechselrichters ab.

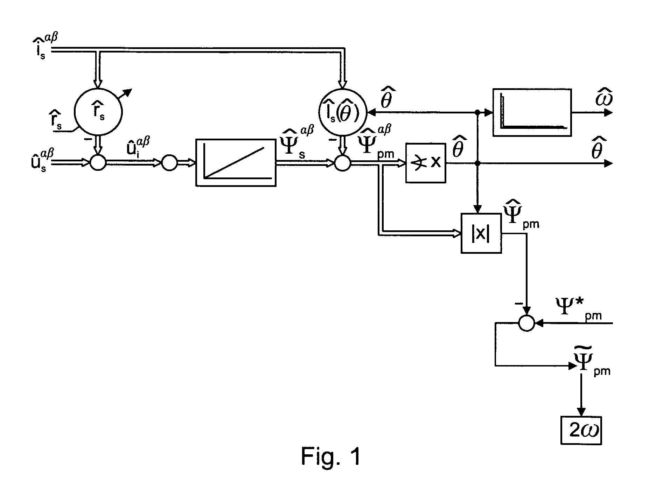

Ein Ausführungsbeispiel der Erfindung wird anhand einer Zeichnung näher erläuter. Dabei zeigt die einzige Figur 1 schematisch ein "sensorloses" Steuerungsverfahren zur Ansteuerung eines Drehfeldmotors unter Heranziehung von Raumzeigergrößen.

Bei der dargestellten Ansteuerung gemäß Figur 1 wird zur Feststellung der Rotorposition des Drehfeldmotors die Statorspannungsgleichung integriert. Demgemäß wird der Raumzeiger der Flussverkettung aus Rotorspannung und Statorwicklung unter Zuhilfenahme eines mathematischen Modells gebildet. Als Eingangsgrößen werden der Statorstromraumzeiger $\hat{\imath}^{\alpha\beta}_s$ sowie der Statorspannungsraumzeiger $\hat{u}^{\alpha\beta}_s$ im statorfesten Koordinatensystem herangezogen. Der Statorstromraumzeiger $\hat{\imath}^{\alpha\beta}_s$ wird hierbei aus gemessenen Phasenströmen ermittelt. Der Statorspannungsraumzeiger $\hat{u}^{\alpha\beta}_s$ wird aus den gestellten Phasenspannungen des Pulswechselrichters gewonnen.

In einem ersten Schritt wird mittels des bekannten ohmschen Widerstands $\dot{r}_s$ der Statorwicklungen die Differenz zwischen Statorspannungsraumzeiger $\hat{u}^{\alpha\beta}_s$ und der am ohmschen Widerstand abfallenden Spannung $\hat{\imath}^{\alpha\beta}_s \hat{r}_s$ gebildet. Über die resultierende Größe $\hat{u}_i^{\alpha\beta}$ wird anschließend numerisch integriert, wodurch sich der Raumzeiger der Statorflussverkettung $\hat{\Psi}_s^{\alpha\beta}$ ergibt. Unter Beachtung der Eigeninduktion, die sich durch Multiplikation der Induktivität $\hat{l}_s(\hat{\vartheta})$ mit dem Statorstromraumzeiger $\hat{\imath}^{\alpha\beta}_s$ ergibt, wird schließlich in einem weiteren Schritt die Flussverkettung von Rotorfluss und Statorwicklung $\hat{\Psi}_{pm}^{\alpha\beta}$ ermittelt. Hieraus kann auf den aktuellen Winkel $\hat{\vartheta}$ geschlossen werden, der zur Ansteuerung des Drehfeldmotors herangezogen wird. Über eine Differentiation kann hieraus die Frequenz $\hat{\omega}$ des Rotors bzw. die Frequenz des Drehfelds bestimmt werden. Der Rotorlagewinkel $\hat{\vartheta}$ findet zugleich Eingang zur Bestimmung der Induktivität $\hat{l}_s(\hat{\vartheta})$, da die Induktivität rotorlagenabhängig sein kann.

Über eine Betragsbildung des Raumzeigers $\hat{\Psi}_{pm}^{\alpha\beta}$ wird schließlich der Skalar $\hat{\Psi}_{pm}$ ermittelt. Über eine Differenzbildung zwischen dem Skalar $\hat{\Psi}_{pm}$ und dem Nennfluss $\hat{\Psi}_{pm}^*$, der bei einem permanent erregten Synchronmotor den magnetischen Fluss der Permanentmagnete des Rotors angibt, wird der Fehler $\tilde{\Psi}_{pm}$ gebildet. Die gebildete skalare Größe $\tilde{\Psi}_{pm}$ wird auf das Vorhandensein einer spektralen Komponente mit der doppelten Frequenz $2\omega$ des Drehfeldes analysiert. Überschreitet der Wert der ermittelten spektralen Komponente einen vorgegebenen Grenzwert, so wird hieraus auf das Vorhandensein eines Teilwindungsschlusses geschlossen.

**Patentansprüche**

1. Verfahren zur Fehlererkennung bei der Ansteuerung eines Drehfeldmotors mittels eines Pulswechselrichters, wobei elektromagnetische Zustandsgrößen des Drehfeldmotors mittels eines mathematischen Modells in Raumzeigerdarstellung ermittelt werden, und wobei der Pulswechselrichter unter Verwendung von Raumzeigergrößen elektronisch angesteuert wird,
**dadurch gekennzeichnet,**
**dass** während des Betriebs des Drehfeldmotors der Raumzeiger einer ungeführten elektromagnetischen Zustandsgröße des Drehfeldmotors gebildet wird, dass der gebildete Raumzeiger auf eine spektrale Komponente mit der doppelten Frequenz des Drehfelds analysiert wird, und dass bei Vorhandensein der spektralen Komponente mit doppelter Frequenz auf einen Teilwindungsschluss in den Statorwicklungen geschlossen wird.

2. Verfahren nach Anspruch 1,
**dadurch gekennzeichnet,**
**dass** der Raumzeiger mittels eines Bandfilters auf das Vorhandensein der spektralen Komponente mit doppelter Frequenz analysiert wird.

3. Verfahren nach Anspruch 1 oder 2,
**dadurch gekennzeichnet,**
**dass** der Betrag des Raumzeigers mittels einer Fourier-Transformation bei doppelter Frequenz auf das Vorhandensein der spektralen Komponente analysiert wird.

4. Verfahren nach einem der vorhergehenden Ansprüche,
**dadurch gekennzeichnet,**
**dass** der Raumzeiger der Flussverkettung von Rotorfluss und Statorwicklung oder der Raumzeiger der elektromotorischen Kraft gebildet und analysiert wird.

5. Verfahren nach einem der Ansprüche 1 bis 3,
**dadurch gekennzeichnet,**
**dass** der Raumzeiger des gesamten Statorflusses, somit der Flussverkettung von Rotorfluss und Statorwicklung einschließlich eines Statorstreuflusses, gebildet und analysiert wird.

6. Verfahren nach Anspruch 4,
**dadurch gekennzeichnet,**
**dass** der Betrag des Raumzeigers der elektromotorischen Kraft gebildet und vor der weiteren Analyse durch die Momentandrehzahl des Drehfeldmotors dividiert wird.

7. Verfahren nach einem der Ansprüche 1 bis 3,
**dadurch gekennzeichnet,**
**dass** zur Ansteuerung des Drehfeldmotors die Phasenströme oder die Phasenspannungen geführt werden, wobei bei Führung der Phasenströme der Raumzeiger der Statorspannung oder bei Führung der Phasenspannungen der Raumzeiger des Statorstroms gebildet und analysiert wird.

8. Verfahren nach einem der vorhergehenden Ansprüche,
**dadurch gekennzeichnet,**
**dass** die Phasenströme und die Phasenspannungen sowie der ohmsche Widerstand und die Induktivität der Statorwicklungen bestimmt werden, und dass diese Größen zur Bildung des zu analysierenden Raumzeigers herangezogen werden.

9. Verfahren nach einem der vorhergehenden Ansprüche,
**dadurch gekennzeichnet,**
**dass** die Raumkoordinaten des Raumzeigers auf die spektrale Komponente mit der doppelten Frequenz des Drehfeldes analysiert werden, dass die analysierte spektrale Komponente der Raumkoordinaten einer Fourier-Analyse unterzogen wird, und dass hieraus auf die räumliche Lage eines Teilwindungsschlusses geschlossen wird.

10. Verfahren nach einem der vorhergehenden Ansprüche,
**dadurch gekennzeichnet,**
**dass** bei der Analyse auf das Vorhandensein der spektralen Komponente mit doppelter Frequenz eine systemimmanente Unsymmetrie berücksichtigt wird.

11. Verfahren nach einem der vorhergehenden Ansprüche,
**dadurch gekennzeichnet,**
**dass** die Amplitude der spektralen Komponente ermittelt und auf einen Nennwert bezogen wird.

12. Verfahren nach einem der vorhergehenden Ansprüche,
**dadurch gekennzeichnet,**
**dass** der ermittelte Raumzeiger zusätzlich auf Asymmetrien untersucht wird, und dass aus den aufgefundenen Asymmetrien auf Asymmetrien einer Messeinrichtung zur Ermittlung elektrischer Größen und/oder der Spannungssteller des Pulswechsel- richters geschlossen wird.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 412248 B
- AT 409906 B